# EUROPÄISCHE PATENTSCHRIFT

(11) **EP 1 693 173 B1**
(45) Veröffentlichungstag und Bekanntmachung des Hinweises auf die Patenterteilung: **27.11.2013**
(21) Anmeldenummer: 06101001.3
(22) Anmeldetag: 30.01.2006
(51) Int. Cl.: B28D 1/04, B28D 7/00, B23D 59/00

(54) **Steuerverfahren einer steuerbaren Wandsäge**
Control method for controllable wall sawing machine
Procédé de commande pour machine à scier des parois commandable

(30) Priorität: 22.02.2005 DE 102005000013
(43) Veröffentlichungstag der Anmeldung: 23.08.2006
(73) Patentinhaber: HILTI Aktiengesellschaft, 9494 Schaan (LI)
(72) Erfinder: Schaer, Roland, 9472 Grabs (CH); Würsch, Christoph, 9470 Werdenberg (CH); Hricko, Peter, 9470 Buchs (CH)
(74) Vertreter: Wildi, Roland

(56) Entgegenhaltungen:
- WO-A-02/070219
- DE-A1- 19 823 756
- US-A- 3 148 001
- US-A- 5 887 579

## Beschreibung

Die Erfindung betrifft ein Steuerverfahren gemäß dem Oberbegriff des Anspruchs 1 und ein Computerprogrammprodukt gemäß dem Anspruch 8.

Direkt an der zu trennenden Wand befestigte Wandsägen mit einem scheibenförmigen Sägeblatt zur Abarbeitung von Stein werden im Baugewerbe beispielsweise zum Auftrennen von Wänden eingesetzt, um mittels mehrerer versetzter Schnitte eine Öffnung in der Wand zu erzeugen. Dabei ist üblicherweise die Wand selbst durch Nebenwände begrenzt, wobei unter Wand auch Boden und Decke zu verstehen ist. Der im verschiebbaren Sägekopf angeordnete Drehantrieb des Sägeblattes erfolgt dabei über hochleistungsfähige Hydraulikmotoren oder Elektromotoren, welche jeweils über flexible Leitungen mit entsprechenden separaten Versorgungsaggregaten verbunden sind.

Nach dem nächstliegenden Stand der Technik US5887579 weist eine Wandsäge einen längs einer Führungsschiene verschiebbaren Sägekopf mit einem Drehantrieb und einem schwenkbar verstellbaren Sägearm auf, an dessen radialem Ende das drehend angetriebene scheibenförmige Sägeblatt lösbar montiert ist, wobei die Führungsschiene selbst an der zu trennenden Wand befestigt ist. Eine derartige Wandsäge, auf welche sich diese Erfindung beschränkt, weist die vom Nutzer steuerbaren Freiheitsgrade der Drehung des Sägeblattes, der Winkelverschwenkung des Sägearmes und der Längsversetzung des Sägekopfes auf. Zudem kann manuell durch einen Wechsel des scheibenförmigen Sägeblattes der Schneiddurchmesser als Parameter geändert werden. Ein zumindest stückweise automatisierter Sägeprozess wird damit jedoch nicht erzielt.

Nach der DE19737617 weist eine direkt an der zu trennenden Wand befestigte, steuerbare Wandsäge eine Steuerelektronik und eine ortsveränderliche Fernsteuerung auf, mit welcher der Drehantrieb und der Vorschub von dem Nutzer manuell fernsteuerbar sind. Dazu ist der hydraulisch Antrieb über programmgesteuerte Hydraulikventile mit Schrittmotoren und Endschalter elektrisch steuerbar. Ein zumindest stückweise automatisierter Sägeprozess wird damit jedoch nicht erzielt, vielmehr erfolgt die direkte Steuerung manuell durch den Nutzer mit der Fernbedienung, der selbst aktiv den Sägeprozess verfolgt.

Zudem sind stationäre programmgesteuerte Steinbearbeitungsmaschinen zum vollautomatischen Trennen kompakter Felssteine bekannt, bspw. nach der DE4006668, bei denen der zu trennende Felsstein auf einem Werktisch im Arbeitsbereich eines längs Führungsschienen mit Wegsensoren in mehreren Dimensionen verschiebbaren Sägeblattes positioniert ist. Im über einen Rechner programmsteuerbaren Sägeprozess fährt das Sägeblatt wiederholt schnitttiefenversetzt hin- und zurück, wobei die optimalen Reversierpunkte nach der DE4003347 aus der mit Entfernungsmesssensoren bestimmten Kontur des Felssteines berechnet werden. Derartige Steuerverfahren sind für direkt an der zu trennenden Wand befestigte Wandsägen nicht geeignet. Zudem müssen beim Trennen von Felssteinen keine Hindernisse in Form von bspw. Seitenwänden beachtet werden.

Die Aufgabe der Erfindung besteht in der Realisierung eines Steuerverfahrens für einen zumindest stückweise automatisierten Sägeprozess einer Wandsäge.

Die Aufgabe wird durch die Merkmale der unabhängigen Ansprüche gelöst. Vorteilhafte Weiterbildungen ergeben sich aus den Unteransprüchen.

Eine weist steuerbare Wandsäge einen längs einer Führungsschiene verschiebbaren Sägekopf mit einem Drehantrieb und einem schwenkbar verstellbaren Sägearm auf, an dessen radialem Ende ein drehend angetriebenes scheibenförmiges Sägeblatt lösbar montiert ist, wobei die Führungsschiene selbst an der zu trennenden Wand befestigbar ist und wobei ein zumindest den Sägekopf und den Sägearm steuerndes Programmsteuermittel mit Eingabe- und Ausgabemitteln vorhanden ist, welches mit einem Verschiebungssensor zur Bestimmung der Position des Sägekopfes längs der Führungsschiene und mit einem Schwenkwinkelsensor zur Bestimmung des Schwenkwinkels des Sägearms zur Längsrichtung der Führungsschiene verbunden ist.

Durch das Programmsteuermittel, den Verschiebungssensor und den Schwenkwinkelsensor ist die steuerbare Wandsäge im Sägeprozess neben einer manuellen Steuerung auch zumindest stückweise automatisiert über ein Programm steuerbar. Der Nutzer wird dadurch von seiner direkten Steueraufgabe entbunden und kann sich vermehrt der Kontrolle des zumindest stückweise automatisierten Sägeprozesses widmen.

Vorteilhaft ist das Ausgabemittel ein grafisches Display, wodurch der Sägeprozess vor Ort grafisch simuliert sowie schematisch verfolgt werden kann.

Durch die periodisch abfolgende Schrittfolge des vollständig vom Programmsteuermittel programmgesteuerten Sägeprozesses einer steuerbaren Wandsäge wird der Nutzer von Routinetätigkeiten entlastet und kann sich somit voll auf die Überwachung des zumindest stückweise automatisierten Sägeprozesses konzentrieren.

Sowohl die Hinrichtung als die Rückrichtung ist eine Zugrichtung, welche mit dem Sägearm einen stumpfen Winkel ausbildet, wodurch in der stabileren Zugrichtung gesägt wird.

Vorteilhaft wird zumindest im ersten Schritt vom Programmsteuermittel die Drehrichtung des Sägeblattes derart orientiert, dass in der Wand die tangentiale Schneidrichtung zur Zugrichtung orientiert ist, wodurch sich längs des Sägearms eine Zugverspannung einstellt, was zu einer stabilen Führung des Sägeblattes beiträgt und somit zu einem sauberen, engen Schnitt führt.

Vorteilhaft ist zwischen dem zweiten und dem dritten Schritt ein weiterer erster Schritt eingefügt, wodurch auch die Rückwärtsrichtung zum Sägefortschritt beiträgt, wodurch die Sägegeschwindigkeit erhöht wird. Erfindungsgemäß wird der Sägearm zuvor umgeschwenkt, wodurch sowohl die Hinrichtung als auch die Rückrichtung in Zugrichtung erfolgt. Dabei wird nach dem Umschwenken das Sägeblatt bis zum nächstliegenden Wendepunkt in Druckrichtung vorgeschoben, wodurch ein exakter Schnittbeginn erreicht wird.

Vorteilhaft ist im manuellen Vorbereitungsprozess über das Eingabemittel eine Endtiefe eingebbar, nach dessen Abarbeitung vom vollständig vom Programmsteuermittel programmgesteuerten Sägeprozess in den Initialzustand zurückgekehrt wird, wodurch der automatisierte Sägeprozess beendet wird.

Vorteilhaft ist im manuellen Vorbereitungsprozess über das Eingabemittel zumindest ein Wendepunkt als ein einseitiges Hindernis definierbar, dessen Überschreitung im vollständig vom Programmsteuermittel programmgesteuerten Sägeprozess als unzulässiger Bereich interpretiert wird, wodurch programmgesteuert sichergestellt ist, dass bei keiner Bewegung das Sägeblatt und/oder der Sägekopf das Hindernis berührt wird.

Vorteilhaft wird beim Eintreten einer vom Programmsteuermittel unlösbaren topologischen/praktischen Beschränkung im Sägeprozess der Nutzer über das Ausgabemittel zum Wechsel des Sägeblattes hin zu einem anderen Sägeblattdurchmesser aufgefordert, wobei weiter vorteilhaft dessen optimaler Wert berechnet und ausgegeben wird, wodurch insbesondere zwischen zwei Seitenwänden tiefe Einschnitte ermöglicht werden.

Vorteilhaft ist im manuellen Vorbereitungsprozess über das Eingabemittel ein nicht als ein Hindernis definierter Wendepunkt als vom Programmsteuermittel veränderbarer Überschnittwendepunkt definierbar, der an der maschinenseitigen Wandseite einen Überschnitt zulässt, welcher über eine Funktion der aktuellen Schnitttiefe und des Sägeblattdurchmessers vom Programmsteuermittel berechenbar ist, bspw. über eine einfache Kreisfunktion. Am Ende des Sägeprozesses endet der Schnitt mit der Endschnitttiefe dann exakt beim gewünschten Ende, d.h. an diesem Überschnittwendepunkt, insbesondere an der, der maschinenseitigen Wandseite gegenüberliegenden, verdeckten Wandseite.

Selbstverständlich ist die Definition eines Wendepunktes als ein Hindernis auch möglich, wenn physisch gar kein Hindernis vorhanden ist, wodurch vom Nutzer erzielt werden kann, dass nach jedem Umschwenken des Sägearms der Schnitt im Druckmodus beendet wird, wodurch ein saubereres Schnittende entsteht.

Die Erfindung wird bezüglich eines vorteilhaften Ausführungsbeispiels näher erläutert mit:
Fig. 1 als Wandsäge
Fig. 2 als Algorithmus des Steuerverfahrens des Sägeprozesses mit einzelnen Moduln (#)
Fig. 3a bis 3k als Ablaufschema eines Sägeprozesses zwischen zwei Seitenwänden

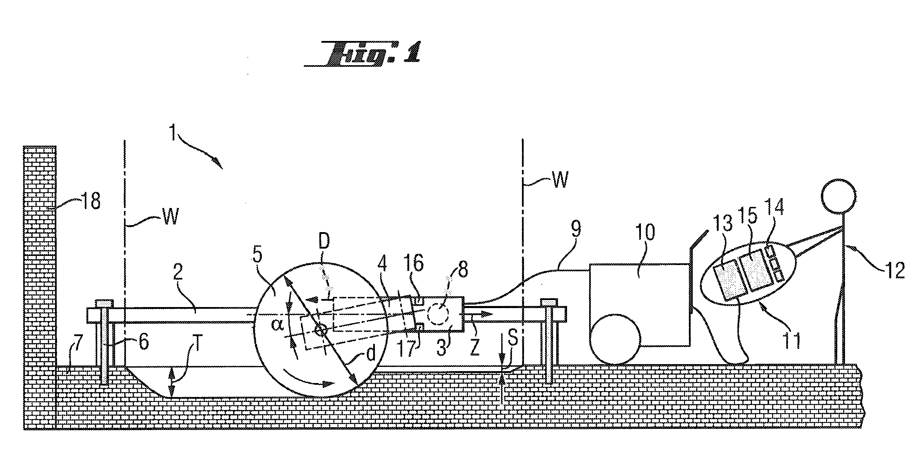

Nach Fig. 1 weist eine steuerbare Wandsäge 1 einen längs einer Führungsschiene 2 verschiebbaren Sägekopf 3 und einen schwenkbar verstellbaren Sägearm 4 auf, an dessen radialem Ende ein drehend angetriebenes scheibenförmiges Sägeblatt 5 lösbar montiert ist. Die Führungsschiene 2 selbst ist über Anker 6 direkt an einer zu trennenden Wand 7 befestigt, welche durch eine dazu senkrechte Nebenwand 18 begrenzt ist. Der im verschiebbaren Sägekopf 3 angeordnete Drehantrieb 8 des Sägeblattes 5 erfolgt dabei über einen hochleistungsfähigen Elektromotor, welcher über flexible Leitungen 9 mit einem separaten, transportablen Versorgungsaggregat 10 verbunden ist, welches wiederum mit einer Fernsteuerung 11 verbunden ist, die ein Nutzer 12 bedient. In der Fernsteuerung 11 ist ein, den Sägekopf 3, den Drehantrieb 8 und den Sägearm 4 steuerndes Programmsteuermittel 13 in Form eines Mikrocontrollers mit Eingabemitteln 14 in Form von Tasten und Ausgabemitteln 15 in Form eines grafischen Displays vorhanden. Das Programmsteuermittel 13 ist zudem mit einem Verschiebungssensor 16 zur Bestimmung der Position des Sägekopfes 3 längs der Führungsschiene 2 und mit einem Schwenkwinkelsensor 17 zur Bestimmung des Schwenkwinkels a des Sägearms 4 zur Längsrichtung der Führungsschiene 2 verbunden. Das Sägeblatt 5 mit einem Sägeblattdurchmesser d arbeitet sich im Sägeprozess über zwischen den beiden Wendepunkten W wiederholte Hin- und Rückbewegungen mit einer inkrementellen Schnitttiefe S bis zu einer Endtiefe T in die Wand 7 ein. Dabei ist das Sägeblatt 5, vermittelt über den Sägekopf 3 und den Sägearm 4, in Zugrichtung Z oder in Druckrichtung D längs der Führungsschiene 2 verschiebbar.

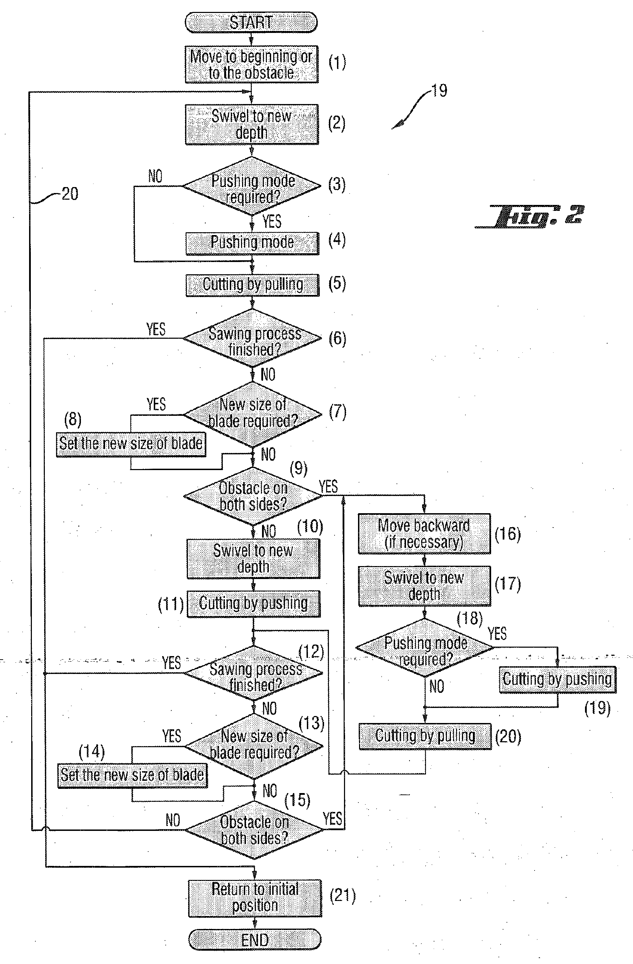

Fig. 2 stellt einen Programmablaufplan eines programmierten Algorithmus 19 des Programmsteuermittels nach Fig. 1 dar, welcher nach einem manuellen Vorbereitungsprozess in einem späteren, vollständig vom Programmsteuermittel programmgesteuerten, zumindest stückweise automatisierten Sägeprozess abgearbeitet wird. Der von START zu END über die einzelnen Moduln (#) gerichtet abgearbeitete Algorithmus 19 besteht aus entsprechend der Ordnung der Modulnummer # zeitlich hintereinander abgearbeiteten Moduln (1) bis (15), (16) bis (20) und dem letzten abgearbeiteten Modul (21), wobei als Ausnahme davon im Modul (3) ein bedingter Sprung zu Modul (5), im Modul (6) ein bedingter Sprung zu Modul (21), im Modul (7) ein bedingter Sprung zu Modul (9), im Modul (9) ein bedingter Sprung zu Modul (16), im Modul (12) ein bedingter Sprung zu Modul (21), im Modul (13) ein bedingter Sprung zu Modul (15), im Modul (15) ein bedingter Sprung zu Modul (2) oder Modul (16), im Modul (18) ein bedingter Sprung zu Modul (20) und im Modul (20) ein unbedingter Sprung zu Modul (12) erfolgt. Die nur eine wesentliche Funktion der Moduln (#) kennzeichnenden Bezeichnungen bedeuten im Einzelnen:
Modul (1): gehe zum Startpunkt oder zum Hindernis
Modul (2), Modul (10), Modul (17): schwenke zur neuen Tiefe
Modul (3), Modul (18): Druckmodus notwendig?
Modul (4): Druckmode
Modul (5), Modul (20): Sägen im Zugmode
Modul (6), Modul (12): Sägeprozess beendet?
Modul (7), Modul (13): neuer Sägeblattdurchmesser erforderlich?
Modul (8), Modul (14): setze neuen Sägeblattdurchmesser
Modul (9), Modul (15): Hindernis beidseitig?
Modul (11), Modul (19): Sägen im Druckmodus
Modul (16): gehe zurück (falls notwendig)
Modul (21): gehe zurück zur Ausgangsposition

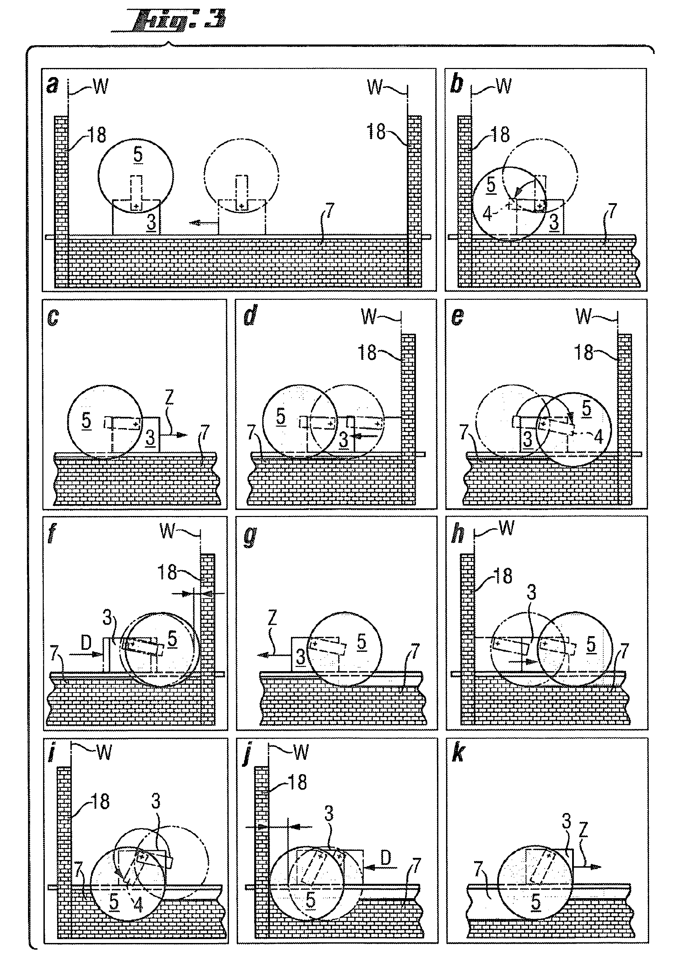

Dabei erfolgt vorbereitend im nicht dargestellten manuellen Vorbereitungsprozess die Fixierung der Führungsschiene direkt an der zu sägenden Wand und die Positionierung des Sägeblattes an einer Initialposition. Zudem erfolgt über das Eingabemittel die Eingabe des Sägeblattdurchmessers, zweier Wendepunkte sowie deren wahlfreier Definition als Hindernis bzw. Überschnittwendepunkt, der Endtiefe, des Sägemodus (Sägen nur in Zugrichtung oder in Zugrichtung/Druckrichtung) und weiterer Parameter wie Wandmaterial und Armierungsstärke. Daraus wird vom Programmsteuermittel die Bestimmung der Drehzahl, der Vorschubgeschwindigkeit und der inkrementellen Schnitttiefe geeignet vorgenommen. Im aus einzelnen Moduln (#) bestehenden Algorithmus 19 des Sägeprozesses, wird nach dem Anfahren eines geeigneten Initialzustands (Fig. 3a) im Modul (1) in einem ersten Schritt im Modul (2) der Sägearm um die inkrementelle Schnitttiefe in Richtung Wand verschwenkt (Fig. 3b) in einem zweiten Schritt im Modul (5) der Sägekopf längs der Führungsschiene in einer, einen stumpfen Winkel mit dem Sägearm ausbildenden, Zugrichtung zu dem ersten Wendepunkt hin mit der Vorschubgeschwindigkeit vorgeschoben (Fig. 3c), und in einem dritten Schritt im Modul (11) der Sägekopf längs der Führungsschiene in der zur Zugrichtung entgegengesetzten Druckrichtung zum zweiten Wendepunkt hin zurückbewegt (Fig. 3d), wobei nachfolgend über einen Rücksprung 20 eine den ersten Schritt im Modul (2), den zweiten Schritt im Modul (5) und den dritten Schritt im Modul (11) umfassende, gerichtete Schrittfolge mehrmals periodisch durchlaufen wird. Dabei wird im zweiten Schritt im Modul (5) bzw. Modul (20) und dritten Schritt im Modul (11) bzw. Modul (19) vom Programmsteuermittel die Drehrichtung des Sägeblattes derart orientiert, dass in der Wand die tangentiale Schneidrichtung zur Zugrichtung orientiert ist (Fig. 1). Zwischen dem zweiten Schritt im Modul (5) bzw. im Modul (20) und dem dritten Schritt im Modul (11) bzw. im Modul (19) ist zur zusätzlichen Verschwenkung um die inkrementelle Schnitttiefe ein dem ersten Schritt im Modul (2) entsprechender, weiterer Schritt im Modul (10) bzw. im Modul (17) eingefügt. Nach der im programmgesteuerten Sägeprozess vollständig vom Programmsteuermittel erfolgten Abarbeitung einer zuvor im manuellen Vorbereitungsprozess über das Eingabemittel eingegebenen Endtiefe, welche jeweils im Modul (6) bzw. Modul (12) getestet wird, wird im letzten Schritt im Modul (21) in den Initialzustand zurückgekehrt. Wurde im manuellen Vorbereitungsprozess über das Eingabemittel ein Wendepunkt als ein Hindernis definiert, wird jeweils im Modul (3) bzw. Modul (18) durch Berechnung sämtlicher bei der Hin- und Rückbewegung auftretender Distanzen vom Sägekopf zum Hindernis dessen Berührung als unzulässig interpretiert, und durch Wechsel des Sägemodus (Zugrichtung <==> Druckrichtung) sichergestellt, dass bei keinem Bewegungszustand das Sägeblatt und/oder der Sägekopf das Hindernis berührt. Beim Eintreten einer im Modul (7) bzw. Modul (13) geprüften, vom Programmsteuermittel unlösbaren topologischen/praktischen Beschränkung im Sägeprozess wird im Modul (8) bzw. Modul (14) der Nutzer über das Ausgabemittel zum Wechsel des Sägeblattes hin zu einem anderen Sägeblattdurchmesser aufgefordert, wobei weiter vorteilhaft dessen optimaler Wert berechnet und ausgegeben wird, wodurch insbesondere zwischen zwei Seitenwänden tiefe Einschnitte ermöglicht werden.

Nach Fig. 3a bis Fig. 3k ist ein vollständig vom Programmsteuermittel programmgesteuerter Sägeprozess zwischen zwei Seitenwänden 18 dargestellt. Die Seitenwände 18 wurden im Vorbereitungsprozess als Wendepunkte W eingegeben und als Hindernisse definiert. Nach Fig. 3a wird der Sägekopf 3 mit von der Wand 3 abgehobenem Sägeblatt 5 zu einem Initialzustand bewegt. Nach Fig. 3b wird anschliessend durch Verschwenken des Sägearms 4 das Sägeblatt 5 in die Wand 7 hinein bewegt. Nach Fig. 3c wird anschliessend der Sägekopf 3 in Zugrichtung Z vorgeschoben. Nach Fig. 3d wird anschliessend bei Annäherung des Sägekopfes 3 an die nahe Seitenwand 18 der Sägekopf 3 zurückgesetzt. Nach Fig. 3e wird anschliessend der Sägearm 4 über den wandfreien Halbraum zur nahen Seitenwand 18 hin umgeschenkt. Nach Fig. 3f wird anschliessend die verbleibende Distanz des Sägeblattes 5 bis zur Seitenwand 18 in Druckrichtung D gesägt. Nach Fig. 3g wird anschliessend der Sägekopf 3 in Zugrichtung Z vorgeschoben. Nach Fig. 3h wird anschliessend bei Annäherung des Sägekopfes 3 an die nahe Seitenwand 18 der Sägekopf 3 zurückgesetzt. Nach Fig. 3i wird anschliessend der Sägearm 4 über den wandfreien Halbraum zur nahen Seitenwand 18 hin umgeschenkt und das Sägeblatt 5 tiefer in die Wand 7 hinein bewegt. Nach Fig. 3j wird anschliessend die verbleibende Distanz des Sägeblattes 5 bis zur Seitenwand 18 in Druckrichtung D gesägt. Nach Fig. 3k wird anschliessend der Sägekopf 3 in Zugrichtung Z vorgeschoben. Dies wird anschliessend ab Fig. 3d mehrfach periodisch wiederholt bis der Schnitt mit einer Endtiefe abgearbeitet ist. Der Sägekopf 3 wird anschliessend in den Initialzustand nach Fig. 3a zurückbewegt.

## Patentansprüche

1. Steuerverfahren einer steuerbaren Wandsäge (1), die einen längs einer Führungsschiene (2) verschiebbaren Sägekopf (3) mit einem Drehantrieb (8) und einen schwenkbar verstellbaren Sägearm (4) aufweist, wobei am radialen Ende des Sägearms (4) ein drehend angetriebenes scheibenförmiges Sägeblatt (5) lösbar montierbar ist,
**dadurch gekennzeichnet, dass**
nach einem manuellen Vorbereitungsprozess zur Fixierung der Führungsschiene (2) an einer zu sägenden Wand (7), der Positionierung des Sägeblattes (5) an einer Initialposition und einer über das Eingabemittel (14) erfolgenden Eingabe zumindest des Sägeblattdurchmessers (d), zweier Wendepunkte (W) sowie zur Bestimmung der Drehzahl, der Vorschubgeschwindigkeit und der inkrementellen Schnitttiefe (S),
in einem späteren, vollständig vom Programmsteuermittel (13) programmgesteuerten Sägeprozess
in einem ersten Schritt der Sägearm (4) um die inkrementelle Schnitttiefe (S) in Richtung Wand (7) verschwenkt wird,
in einem zweiten Schritt der Sägekopf (3) längs der Führungsschiene (2) in einer Hinrichtung mit der Vorschubgeschwindigkeit zu einem ersten Wendepunkt (W) hin derart ziehend bewegt wird, dass das radiale Ende des Sägearms (4) von dem ersten Wendepunkt (W) wegweist, und bei Annäherung des Sägekopfs (3) an den ersten Wendepunkt (W) der Sägekopf hinreichend weit zurückgesetzt, über den wandfreien Raum in Richtung dieses Hindernisses umgeschwenkt und der Sägekopf (3) schiebend auf den ersten Wendepunkt (W) zubewegt wird,
und
in einem dritten Schritt der Sägekopf (3) längs der Führungsschiene (2) in der zur Hinrichtung entgegengesetzten Rückrichtung zum zweiten Wendepunkt (W) hin derart ziehend bewegt wird, dass das radiale Ende des Sägearms (4) von dem zweiten Wendepunkt (W) wegweist, und bei Annäherung des Sägekopfs (3) an den zweiten Wendepunkt (W) der Sägekopf hinreichend weit zurückgesetzt, über den wandfreien Raum in Richtung dieses Hindernisses umgeschwenkt und der Sägekopf (3) schiebend auf den zweiten Wendepunkt (W) zubewegt wird,
wobei nachfolgend eine, zumindest den ersten Schritt, den zweiten Schritt und den dritten Schritt umfassende, gerichtete Schrittfolge zumindest ein weiteres mal durchlaufen wird.

2. Steuerverfahren nach Anspruch 1, **dadurch gekennzeichnet, dass** zumindest im ersten Schritt vom Programmsteuermittel die Drehrichtung des Sägeblattes (5) derart orientiert wird, dass in der Wand (7) die tangentiale Schneidrichtung zur Zugrichtung (Z) orientiert ist.

3. Steuerverfahren nach Anspruch 1 oder 2, **dadurch gekennzeichnet, dass** zwischen dem zweiten und dem dritten Schritt ein weiterer erster Schritt eingefügt ist.

4. Steuerverfahren nach einem der vorhergehenden Ansprüche, **dadurch gekennzeichnet, dass** vom vollständig vom Programmsteuermittel (13) programmgesteuerten Sägeprozess nach Abarbeitung einer, im manuellen Vorbereitungsprozess über das Eingabemittel (14) eingebbaren, Endtiefe (T) der Sägekopf (3) in den Initialzustand zurückbewegt wird.

5. Steuerverfahren nach einem der vorhergehenden Ansprüche, **dadurch gekennzeichnet, dass** im vollständig vom Programmsteuermittel (13) programmgesteuerten Sägeprozess eine Überschreitung zumindest eines, im manuellen Vorbereitungsprozess über das Eingabemittel (14) als ein Hindernis definierten, Wendepunktes (W) als unzulässiger Bereich interpretiert wird.

6. Steuerverfahren nach einem der vorhergehenden Ansprüche, **dadurch gekennzeichnet, dass** im vollständig vom Programmsteuermittel (13) programmgesteuerten Sägeprozess beim Eintreten einer vom Programmsteuermittel (13) unlösbaren topologischen/praktischen Beschränkung im Sägeprozess der Nutzer (12) über das Ausgabemittel (15) zum Wechsel des Sägeblattes (5) hin zu einem anderen Sägeblattdurchmesser (d) aufgefordert wird, wobei optional dessen optimaler Wert berechnet und ausgegeben wird.

7. Steuerverfahren nach einem der vorhergehenden Ansprüche, **dadurch gekennzeichnet, dass** im manuellen Vorbereitungsprozess über das Eingabemittel (14) ein nicht als ein Hindernis definierter Wendepunkt (W) als vom Programmsteuermittel (13) veränderbarer Überschnittwendepunkt definierbar ist, der an der maschinenseitigen Wandseite einen Überschnitt zulässt, welcher über eine Funktion der aktuellen Schnitttiefe und des Sägeblattdurchmessers (d) vom Programmsteuermittel (13) berechenbar ist.

8. Computerprogrammprodukt, das ausgeführt durch einen Mikroprozessor, ein Steuerverfahren nach einem der Ansprüche 1 bis 7 wiederholt.

## Claims

1. Control method for a controllable wall saw (1) comprising a saw head (3) displaceable along a guide rail (2) and provided with a rotary drive (8), and a pivotably adjustable saw arm (4), wherein a rotatably driven disc-shaped saw blade (5) can be releasably mounted at the radial end of the saw arm (4),
**characterised in that**,
after a manual set-up process for fixing the guide rail (2) to a wall (7) to be cut, positioning the saw blade (5) in an initial position, inputting at least the saw blade diameter (d) and two reversal points (W) via the input means (14) and determining the rotational speed, the feed rate and the incremental cutting depth (S),
in a subsequent sawing process completely program-controlled by the program control means (13),
in a first step, the saw arm (4) is swivelled in the direction of the wall (7) by the incremental cutting depth (S),
in a second step, the saw head (3) is pulled along the guide rail (2) in a forward direction at the feed rate towards a first reversal point (W) in such a manner that the radial end of the saw arm (4) is directed away from the first reversal point (W) and, when the saw head (3) approaches the first reversal point (W), the saw head is reversed sufficiently far and pivoted around over the wall-free space in the direction of this obstacle and the saw head (3) is pushed towards the first reversal point (W),
and,
in a third step, the saw head (3) is pulled along the guide rail (2) in the reverse direction opposite to the forward direction towards the second reversal point (W) in such a manner that the radial end of the saw arm (4) is directed away from the second reversal point (W) and, when the saw head (3) approaches the second reversal point (W), the saw head is reversed sufficiently far and pivoted around over the wall-free space in the direction of this obstacle and the saw head (3) is pushed towards the second reversal point (W),
wherein a defined sequence of steps including at least the first step, the second step and the third step is then performed at least one further time.

2. Control method according to claim 1, **characterised in that**, at least in the first step, the direction of rotation of the saw blade (5) is oriented in such a manner by the program control means that, in the wall (7), the tangential cutting direction is oriented towards the pulling direction (Z).

3. Control method according to claim 1 or claim 2, **characterised in that** a further first step is inserted between the second step and the third step.

4. Control method according to one of the preceding claims, **characterised in that**, in the sawing process completely program-controlled by the program control means (13), after machining an end depth (T) that can be input via the input means (14) in the manual set-up process, the saw head (3) is returned to the initial position.

5. Control method according to one of the preceding claims, **characterised in that**, in the sawing process completely program-controlled by the program control means (13), crossing over at least one reversal point (W) defined as an obstacle via the input means (14) in the manual set-up process is interpreted as inadmissible.

6. Control method according to one of the preceding claims, **characterised in that**, in the sawing process completely program-controlled by the program control means (13), when a topological/practical limitation that cannot be resolved by the program control means (13) occurs in the sawing process, the user (12) is advised via the output means (15) to exchange the saw blade (5) for a saw blade with a different diameter (d), wherein its optimal value may be calculated and output.

7. Control method according to one of the preceding claims, **characterised in that** a reversal point (W) not defined as an obstacle can be defined via the input means (14) in the manual set-up process as a cross-over reversal point that can be changed by the program control means (13) and that allows for cross-over at the wall side on the machine side, wherein the cross-over can be calculated by the program control means (13) as a function of the current cutting depth and the saw blade diameter (d).

8. Computer program product that repeats a control method according to one of claims 1 to 7, executed by a microprocessor.

## Revendications

1. Procédé de commande pour une machine à scier des parois commandables, qui présente une tête de scie (3) pouvant être coulissée le long d'un rail de guidage (2) et dotée d'un entraînement rotatif (8) et un bras de scie (4) pouvant être déplacé de manière à pouvoir pivoter, dans lequel une lame de scie (5) présentant une forme de disque et entraînée en rotation peut être montée de manière amovible au niveau de l'extrémité radiale d'un bras de scie (4),
**caractérisé en ce**
**qu'**après un processus de préparation manuel aux fins de la fixation du rail de guidage (2) au niveau d'un mur (7) à scier, après le positionnement de la lame de scie (5) au niveau d'une position initiale et la saisie, effectuée par l'intermédiaire du moyen de saisie (14), au moins du diamètre (d) de la lame de scie, de deux points d'inflexion (W) ainsi qu'aux fins de la détermination de la vitesse de rotation, de la vitesse d'avancement et de la profondeur de coupe (S) incrémentielle,
lors d'un processus de sciage ultérieur complètement commandé par un moyen de commande de programme (13),
le bras de scie (4) est, lors d'une première étape, pivote en direction du mur (7) dans la profondeur de coupe incrémentielle(S),
la tête de scie (3) est déplacée par traction lors d'une deuxième étape le long du rail de guidage (2) dans une direction aller, à la vitesse d'avancement, en direction d'un premier point d'inflexion (W) de telle manière que l'extrémité radiale du bras de scie (4) s'éloigne du premier point d'inflexion (W), et en ce qu'à l'approche de la la tête de scie (3) du premier point d'inflexion (W), la tête de scie (3) recule suffisamment loin, pivote sur l'espace sans mur en direction de cet obstacle et est approchée par glissement du premier point d'inflexion (W),
et
en ce que lors d'une troisième étape la tête de scie (3) est déplacée par traction en direction du deuxième point d'inflexion (W) le long du rail de guidage (2) dans la direction retour opposée à la direction aller de telle manière que l'extrémité radiale du bras de scie (4) s'éloigne du deuxième point d'inflexion (W), et qu'à l'approche de la tête de scie (3) du deuxième point d'inflexion (W) la tête de scie (3) recule suffisamment loin, est pivotée sur l'espace sans mur en direction dudit obstacle et est approchée par glissement du deuxième point d'inflexion (W),
Suite à une succession d'étapes effectuée comprenant au moins la première étape, la deuxième étape et la troisième étape se déroule au moins une nouvelle fois.

2. Procédé de commande selon la revendication 1, **caractérisé en ce que** la direction de rotation de la lame de scie (5) est orientée, au moins lors de la première étape par le moyen de commande de programme, de telle manière que la direction de coupe tangentielle dans le mur (7) est orientée par rapport à la direction de traction (Z).

3. Procédé de commande selon la revendication 1 ou 2, **caractérisé en ce qu'**une autre première étape est introduite entre la deuxième et la troisième étape.

4. Procédé de commande selon l'une quelconque des revendications précédentes, **caractérisé en ce que** la tête de scie (3) est ramenée dans l'état initial par le processus de sciage commandé par le moyen de commande de programme (13) à l'issue du traitement d'une profondeur finale (T) pouvant être saisie lors du processus de préparation manuel par l'intermédiaire du moyen de saisie (14).

5. Procédé de commande selon l'une quelconque des revendications précédentes, **caractérisé en ce qu'**un dépassement au moins d'un point d'inflexion (W) défini comme un obstacle dans le processus de préparation manuel par l'intermédiaire du moyen de saisie (14) est interprété dans le processus de sciage commandé par le moyen de commande de programme (13) comme une zone non admise.

6. Procédé de commande selon l'une quelconque des revendications précédentes, **caractérisé en ce que** l'utilisateur (12) est invité par l'intermédiaire du moyen de sortie (15) à changer la lame de scie (5) par une lame présentant un autre diamètre (d) dans le processus de sciage commandé par le moyen de commande de programme (13) lors de l'apparition, dans le processus de sciage, d'une limitation topologique/pratique ne pouvant être résolue par le moyen de commande de programme (13), en option la valeur optimale du diamètre de la lame de scie est calculée et délivrée.

7. Procédé de commande selon l'une quelconque des revendications précédentes, **caractérisé en ce qu'**un point d'inflexion (W) non défini comme un obstacle peut être défini comme point d'inflexion de chevauchement modifiable par le moyen de commande de programme (13) lors du processus de préparation manuel par l'intermédiaire du moyen de saisie (14), lequel point d'inflexion de chevauchement autorise un chevauchement au niveau du côté du mur côté machine, lequel chevauchement peut être calculé par le moyen de commande de programme (13) par l'intermédiaire d'une fonction de la profondeur de coupe du moment et du diamètre de lame de scie (d).

8. Produit-programme informatique qui, exécuté par un microprocesseur, répète un procédé de commande selon l'une quelconque des revendications 1 à 7.
